# EUROPEAN PATENT APPLICATION

(11) **EP 1 946 825 A1**
(43) Date of publication of application: **23.07.2008**
(21) Application number: 07022736.8
(22) Date of filing: 23.11.2007
(51) Int. Cl.: B01D 63/08, B01D 65/00

(54) **Filtration assemblies and methods of maintaining compression of filtration units in filtration assemblies**

(30) Priority: 11.12.2006 US 873980 P
(71) Applicant: PALL CORPORATION, East Hills, New York 11548 (US)
(72) Inventor: Gagnon, Roger, Great River, NY 11739 (US); Morizio, Franco, Commack, NY 11725 (US); Ieraci, Robert, Franklin Square, NY 11010 (US)
(74) Representative: Hoeger, Stellrecht & Partner Patentanwälte

(57) **Abstract**

A filtration assembly may comprise first and second end pieces (14a,14b) having inner and outer faces, at least one filtration unit (11) between the inner faces of the first and second end pieces, and at least one compression rod arrangement (20) extending between the end pieces. The compression rod arrangement comprise an unthreaded compression rod and a locking device (22,42) mounted to the compression rod to maintain compression of the filtration unit between the end pieces. A method of maintaining compression of filtration units may comprise installing at least one filtration unit between a first end piece and a second end piece and maintaining compression of the end pieces and the filtration unit, including mounting a locking device to an unthreaded compression rod.

## Description

### FIELD OF THE INVENTION

The invention relates to filtration assemblies and methods of maintaining compression of filtration units in filtration assemblies for any and all types of separation processes. More particularly, it relates to filtration assemblies including unthreaded compression rod arrangements.

Filtration assemblies embodying the invention may be arranged for tangential flow filtration or for direct flow or dead-end flow filtration. For direct flow or dead-end flow filtration, process or feed fluid may be directed to a permeable filtration medium. All of the feed fluid then passes through the filtration medium as filtrate or permeate, except any substances in the fluid that are retained by the filtration medium. For tangential flow filtration, feed fluid may be directed tangentially along a permeable filtration medium. A portion of the feed fluid passes through the filtration medium as permeate, and the remaining portion of the feed fluid, the concentrate or retentate, is directed away from the filtration medium.

Filtration assemblies embodying the invention may include at least one filtration unit aligned and compressed between first and second end pieces. At least one compression rod arrangement may extend between the end pieces and maintain compression of the filtration units. The compression rod arrangement may include an unthreaded compression rod and a locking device. The filtration assemblies may comprise one or more manifolds that may be arranged with the filtration units to feed fluid to the filtration units and/or to collect fluid from the filtration units.

### BRIEF SUMMARY OF THE INVENTION

In accordance with one aspect of the invention, filtration assemblies may comprise first and second end pieces, at least one filtration unit between the first and second end pieces, and at least one compression rod arrangement extending between the end pieces. The compression rod arrangement may comprise an unthreaded compression rod and a locking device mounted to the compression rod to maintain compression of the filtration unit or units between the end pieces.

In accordance with another aspect of the invention, filtration assemblies may comprise first and second end plates having inner and outer faces, and a manifold having first and second opposite sides and being positioned between the inner faces of the first and second end plates. The filtration assemblies may also comprise at least one filtration unit between the first side of the manifold and the inner face of the first end plate, at least one filtration unit between the second side of the manifold and the inner face of the second end plate, and a plurality of compression rod arrangements extending between the end plates. One or more of the compression rod arrangements may comprise an unthreaded compression rod and a locking device mounted to the compression rod to establish and/or maintain the compression of the filtration units and manifold between the end plates.

In accordance with another aspect of the invention, methods of maintaining compression of filtration units in a filtration assembly may comprise installing at least one filtration unit between a first end piece and a second end piece and maintaining compression of the end pieces and filtration unit, including mounting a locking device to an unthreaded compression rod.

Filtration assemblies and methods of maintaining compression of filtration units according to the present invention have many advantages. For example, unthreaded compression rods according to the invention stay cleaner and more sanitary longer than threaded compression rods. The helical thread on a threaded compression rod, e.g., similar to a threaded bolt, provides numerous crevices that may trap contaminants including, e.g., dust, dirt, mold, and bacteria. The lack of threads in the compression rod arrangements according to the invention reduces or prevents the trapping of contaminants and makes cleaning of the rods easier and far more effective. Unthreaded compression rod arrangements according to the invention may therefore be useful in a wide variety of applications, particularly applications requiring clean equipment, such as, for example, bioprocessing and biopharmaceutical applications.

The assemblies and methods of the invention may also maintain compression of the filtration units more easily and effectively. A compression rod arrangement according to the invention may compress varying numbers of filtration units, i.e., varying multiples of filtration unit area, without having to tediously adjust nuts over long lengths of threads. Accordingly, compression rod arrangements according to the invention may be easily and quickly adjusted to accommodate varying numbers of filtration units or varying multiples of filtration unit area.

Moreover, compression rod arrangements according to the invention may also make it easier to maintain consistent compression of the filtration units than it would be to provide consistent compression with threaded compression rods. For example, compression rod arrangements according to the invention may position the locking device on the rod at spaced intervals, which intervals may be constant from one compression rod arrangement to another. This provides a greater uniformity as to the position of each locking device along the rod than would be possible with respect to the position of a nut threaded on a helically threaded rod. Accordingly, more consistent compression may be applied to the filtration units, e.g., to both edges of a set of filtration units, or to filtration units on multiple sides of a manifold.

### BRIEF DESCRIPTION OF THE SEVERAL VIEWS OF THE DRAWINGS

Figure 1 is a representative view of one embodiment of a filtration assembly.

Figure 2 is a front view of an end plate.

Figure 3 is a perspective view of one embodiment of a compression rod including bores.

Figure 4 is a perspective view of one embodiment of a compression rod arrangement including a sleeve.

Figure 5 is a side view of the compression rod of Figure 4.

Figure 6 is a cross section of a compression rod including a groove which extends completely around the compression rod.

Figure 7 is a cross section of the compression rod of Figure 5 taken along section A-A and including a groove which extends partially around the compression rod.

Figure 8 is a cross section of a compression rod including a groove having a varying depth.

Figure 9 is a cross section of the compression rod of Figure 5 taken along B-B and including a longitudinal track.

Figure 10 is a representative view of a locking device including a locking pin.

Figure 11 is a plan view of a locking device including a sleeve having a loading pin.

Figure 12 is a plan view of a locking device including a hinged sleeve.

Figure 13 is plan view of a locking device including a split sleeve having a magnetic attachment.

Figure 14 is a representative view of a locking device including a sleeve having a split collar.

Figure 15 is a cross section of a compression rod arrangement including a locking device comprising a U-shaped collar.

Figure 16 is a representative view of a compression rod arrangement including a locking device having a ratchet mechanism.

### DETAILED DESCRIPTION OF THE INVENTION

Many different filtration assemblies may embody one or more aspects of the invention. For example, a filtration assembly may include first and second end pieces and at least one filtration unit positioned between the first and second end pieces. The filtration assembly may include at least one manifold which may have fluid passages that channel feed fluid, permeate and/or retentate to and/or from fluid passages in the filtration units. None, one, or both of the end pieces may comprise a manifold, and/or one or more manifolds may be located between the end pieces. The filtration assembly may further include one or more, e.g., between two and eight, compression rod arrangements. The compression rod arrangements may extend between the end pieces, or between each end piece and a manifold, to compress the filtration units, or a manifold and the filtration units, between the end pieces with the respective fluid passages of adjacent components sealed to one another. The compression rod arrangements may be configured in a wide variety of ways.

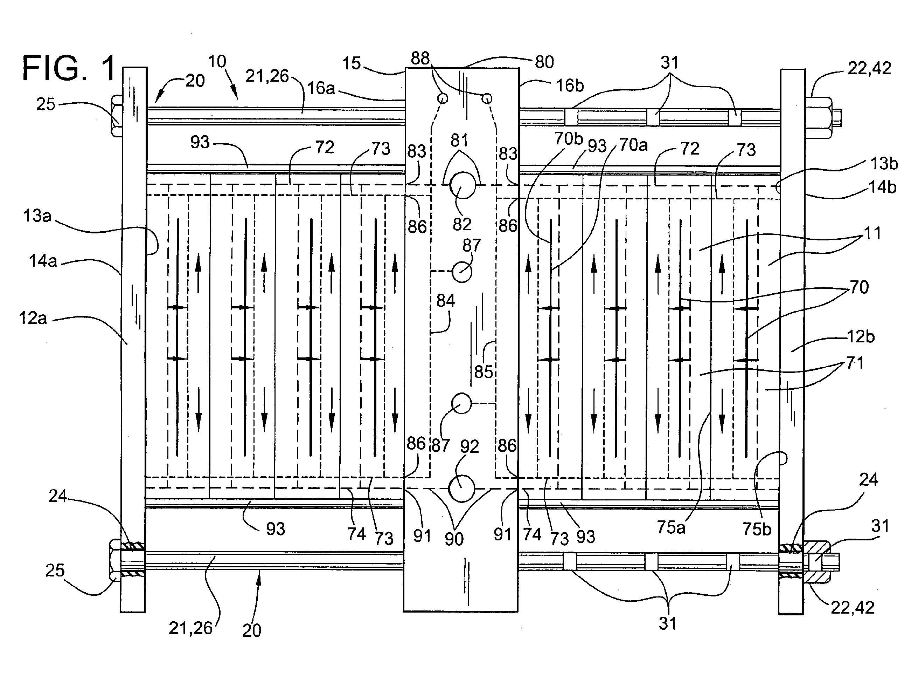

One example of a filtration assembly is shown in Figure 1. The filtration assembly 10 may include several filtration units 11 between first and second end pieces, e.g., first and second end plates 12a, 12b. Each end plate 12a, 12b may include an inner face 13a, 13b and an outer face 14a, 14b and may be free of fluid passages. The filtration assembly 10 may further include a manifold 15 which has fluid passages for directing feed fluid, permeate and retentate to and from the respective fluid passages in the filtration units 11. At least one filtration unit 11 may be positioned on each side 16a, 16b of the manifold 15. For example, one set of one or more filtration units 11 may be positioned between the inner face 13a of the first end plate 12a and one side 16a of the manifold 15, and another set of one or more filtration units 11 may be positioned between the inner face 13b of the second end plate 12b and the opposite side 16b of the manifold 15. The manifold 15 may then function as an intermediate end piece for each set of filtration units 11. A plurality of compression rod arrangements 20 may extend between the first and second end pieces, e.g., the first and second end plates 12a, 12b, and may compress the filtration units 11 and the manifold 15 between the inner faces 13a, 13b of the end plates 12a, 12b. The respective fluid passages of the adjacent filtration units 11 and the manifold 15 may be sealed to one another by the compression, and the end plates 12a, 12b may close off any fluid passages at the interface between each end plate 12a, 12b and an adjacent filtration unit 11. Each compression rod arrangement 20 may include an unthreaded compression rod 21 and a locking device 22 mounted to the unthreaded compression rod 21 to establish and/or maintain compression of the filtration units 11 and the manifold 15 between the end plates 12a, 12b.

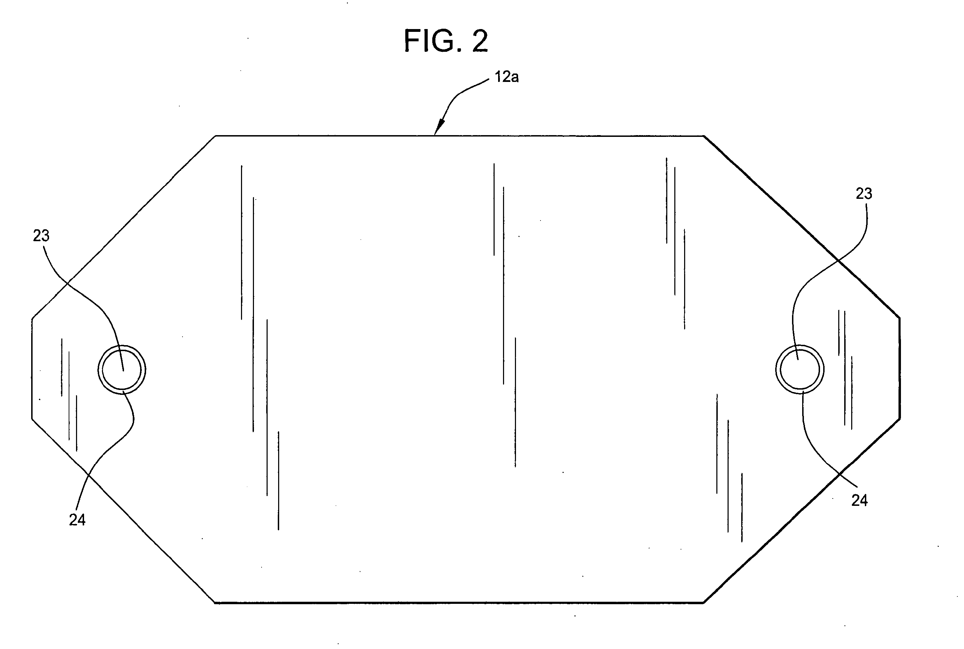

The compression rod arrangements may be arranged to compress the filtration units and the manifold in a variety of ways. For example, the compression rod arrangements may extend between and may be connected to the opposite end plates, an end plate and a manifold, or two manifolds. In the embodiment shown in Figures 1 and 2, one end of the compression rod 21 may be slidably mounted on the first end plate 12a, e.g., in a hole 23 that may or may not include a bushing 24, and may pass partially or completely through the first end plate 12a. The rod 21 may extend to and/or beyond the second end plate 12b, may be slidably mounted on the second end plate 12b, e.g., in hole 23 that may or may not include a bushing 24, and may pass partially or completely through the second end plate 12b. The compression rod 21 may extend between the end plates 12a, 12b past the manifold 15, e.g., through a hole in the manifold 15 that may or may not include a bushing. The locking device 22 may be mounted to the compression rod 21 along the outer face 14a, 14b of one or both of the end plates 12a, 12b.

A compression rod arrangement, including the compression rod and the locking device, may be configured in a number of different ways. The compression rod arrangement may be fashioned from any suitable material, including, for example, a metal, such as stainless steel, or a plastic, and may have any suitable configuration, including an elongated configuration such as, for example, a generally cylindrical configuration. Furthermore, the compression rod arrangement may be unthreaded, i.e., may not include a helical thread which runs repeatedly around the exterior of the compression rod. Different filtration assemblies may have different sizes depending, e.g., on the number and size of the filtration units, and the length and diameter of the compression rod arrangement, as well as the number of compression rod arrangements, may be varied accordingly.

The compression rod may be configured in any of a variety of different ways. For example, as shown in Figure 1, the compression rod 21 may include a cap 25 on at least one end of the elongated body 26 of the rod 21. The cap 25 may have a lateral dimension which is greater than the lateral dimension, e.g., the outer diameter, of the body 26 of the rod 21 and may be positioned adjacent to, e.g., may contact, at least one of the end pieces, e.g., an end plate or a manifold. A washer may be mounted to the rod between the cap and the end piece. In Figure 1, the cap 25 bears against the outer face 14a of the first end plate 12a and is arranged to withstand the force applied to it by the compressed filtration assembly, e.g., by the end piece, and maintain compression of the assembly. Alternatively, the compression rod may include a fitting on the end of the rod that securely mates with a socket in an end piece to maintain compression of the filtration assembly.

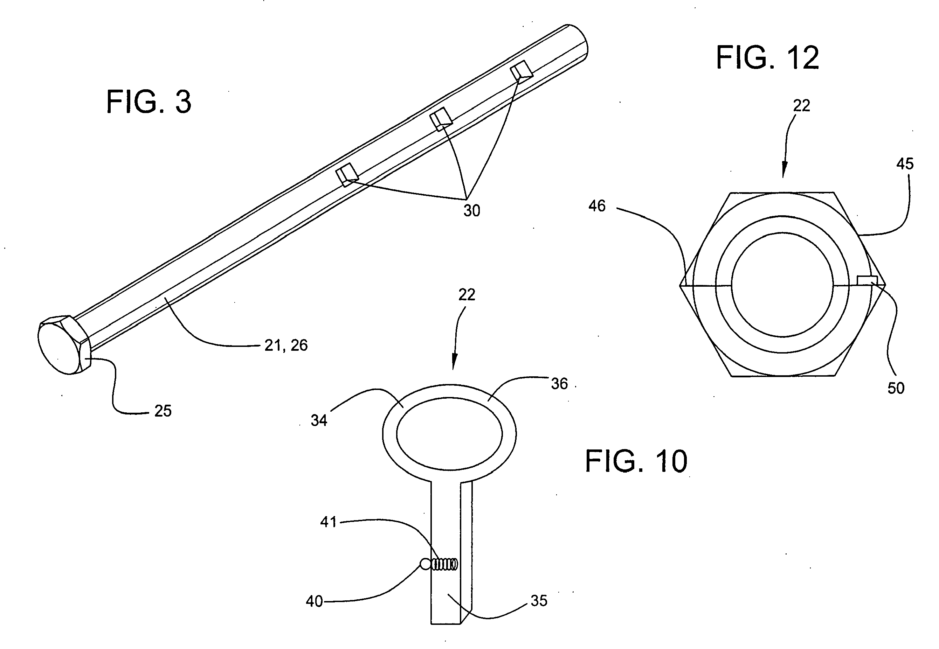

The compression rod may also include one or more formations that may be engaged by the locking device to position and/or maintain the locking device in place on the compression rod. The locking device and the formation may be dimensioned and configured to withstand the force applied by the compressed filtration assembly and maintain compression of the assembly. The formations may be configured in any of a variety of different ways to interact with a corresponding locking device. For many embodiments, the formations may also have large, easily cleanable and sanitizable features. An exemplary formation may include one or more bores 30 that partially or completely penetrate the elongate body 26 of the compression rod 21 generally radially, for example, as shown in Figure 3. The bores 30 may have any suitable cross section, including, for example, a circular or a square cross section. Each bore may interact with a corresponding locking device to secure the locking device axially in position on the rod.

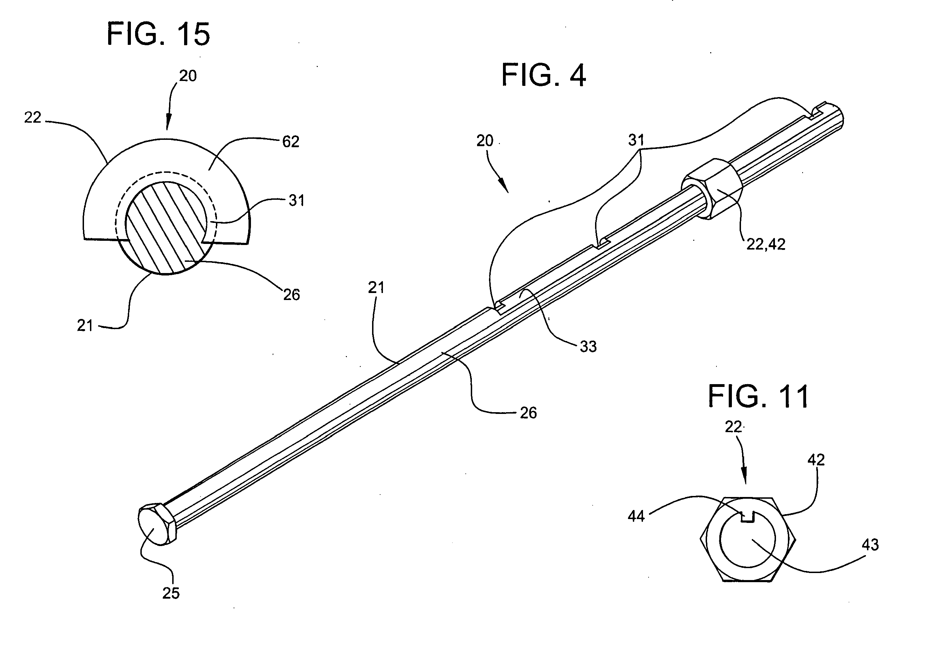

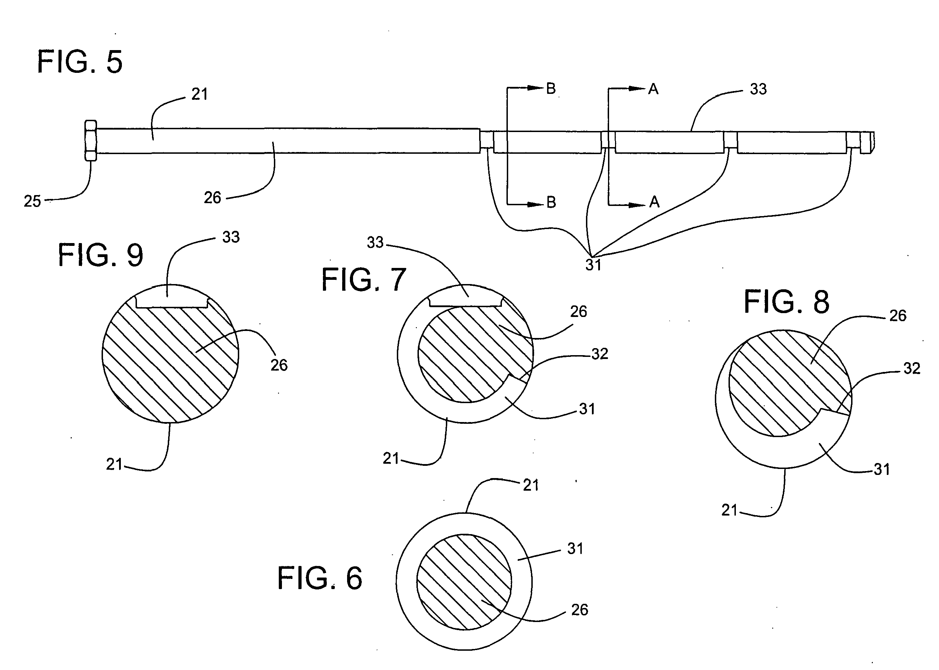

Another exemplary formation may include one or more grooves, including, for example, grooves that extend circumferentially around the periphery of the body of the compression rod. As shown in Figures 4 and 5, the formations may comprise a plurality of circumferential grooves 31 axially spaced along the body 26 of the compression rod 21. Each groove may interact with a corresponding locking device to secure the device axially in position on the rod.

The grooves 31 may have a shape and/or size which facilitates cleaning and securely holds the locking device to the compression rod. For example, each groove 31 may have a wide generally U-shaped configuration with a broad, flat bight portion, as shown in Figure 5. For example, the width of the bight portion may be greater than about one-eighth or greater than about one-quarter of the diameter of the rod 21. The groove 31 may extend circumferentially completely around the body 26 of the compression rod 21, as shown in Figure 6, or may extend circumferentially around the body 26 of the rod 21 less than 360°, for example, less than about 240°, as shown in Figures 7 and 8. By extending less than 360° around the rod 21, the groove 31 may provide a stop 32 which prevents unlimited rotation of the locking device in the groove 31. The groove 31 may have a constant depth over the circumference of the rod 21, as shown in Figures 6 and 7, or a variable depth, as shown in Figure 8. For example, the bottom of the groove 31 may spiral into the body 26 of the rod 21 over a portion of the circumference of the rod 21. Each groove may be deep enough so that engagement between the locking device and the groove reliably withstands the forces applied by the compressed filtration assembly. Each groove also leaves sufficient material remaining in the body of the rod to maintain the strength of the rod under stress, e.g., compressive stress or elongation stress provided by the loading and unloading of the locking device.

The formations, including the bores 30 and the grooves 31, may be positioned along the compression rod in any of a variety of different ways. For example, the formations may be positioned along the rod at locations that accommodate the width of one or more filtration units combined with the width of an end piece. As shown in Figure 1, for example, the grooves 31 may be positioned on the rod 21 at locations that accommodate the width of a single filtration unit 11 in addition to the width of an end plate 12b. Moreover, adjacent formations may be spaced to correspond to one or more thicknesses of the filtration units. For example, adjacent grooves may be spaced along the compression rod in accordance with the thickness of a single filtration unit. Alternatively or additionally, the formations may be spaced on the compression rod at intervals equal to an integral number, e.g., one, two, three, or four, times the thickness of a filtration unit. For example, as shown in Figure 1, adjacent grooves 31 may be spaced on the compression rod 21 at intervals equal to one times the width of a filtration unit 11. The rod may include any number of formations, for example, up to four or more formations.

Alternatively, the formations may not be spaced on the rod to correspond to the width of the filtration units or positioned on the rod to accommodate the width of the filtration units in addition to the width of an end piece. The assembly may optionally include spacers positioned on the compression rod between an end piece and the formation that engages the locking device in order to accommodate a width of filtration units that may not correspond to the spacing of the formations on the rod.

The formations previously described are merely exemplary and do not exclude the possibility of other formations. For example, the formations may include a longitudinal track 33 which extends axially along the periphery of the compression rod 21. As shown in Figures 4 and 5, the longitudinal track 33 may extend axially from one end of the rod 21, e.g., the end opposite the cap 25, past each of the circumferential grooves 31. The track 33 may be variously configured, for example, as a broad flat that runs axially along the body 26 of the rod 21, as shown in Figure 9, and intersects each circumferential groove 31. Moreover, the formations need not be in the form of cavity structures, such as bores, grooves, and flats, but may alternatively include projections that may engage with a locking device. The locking device may include a corresponding cavity structure to engage the projections. Other exemplary formations may include holes, sprockets, pins, spring loads, latches, magnets, ball detent mechanisms, buttons, etc. The formations may include any structure that provides a secure, unthreaded engagement with the locking device and can withstand the force applied to the locking device by the compressed filtration assembly.

The locking device may also be unthreaded and may be configured in any of a variety of different ways. For example, the locking device may be configured to interact with a corresponding formation on the compression rod to form an engagement that can secure the locking device in place on the rod, withstand the pressure applied to it by the compressed filtration assembly, and maintain compression of the assembly.

For some embodiments, the locking device 22 may comprise a locking pin 34, as shown, for example, in Figure 10. The locking pin 34 may include an unthreaded shaft 35 that corresponds to and is capable of engaging a formation on the compression rod 21, e.g., a bore 30 as shown in Figure 3. The cross section of the shaft may closely correspond to the cross section of the bore. For many embodiments, the shaft and the bore may have a square cross section which provides a large, flat surface area to counteract the force applied to the locking pin by the compressed filtration assembly.
The locking pin 34 may further include a head 36, and the head 36 may also have a broad surface area to counteract the force applied by the compressed filtration assembly. To secure the locking pin 34 axially in place on the compression rod 21, the shaft 35 may be radially inserted into a bore 30 near an end piece, e.g., the outer face of an end plate. The locking pin 34 may include a stop or a detent to hold the pin 34 in position in the bore 30. For example, the lower portion of the shaft 35 may include a ball 40 biased outwardly by a spring 41. The ball 40 may compress the spring 41 and move into the shaft 35 as the shaft 35 is inserted into the bore 30. Once the ball 40 exits the bore 30, the spring 41 may expand to engage the ball 40 with the exterior of the compression rod to hold the pin 34 in position in the bore 30 with the head 36 and the lower portion of the shaft 35 extending beyond the outer surface of the rod 21. Alternatively, the ball may engage a cavity in the bore of the compression rod. An end piece, e.g., the outer face of an end plate, may then bear against the locking pin 34, e.g., the head 36 and the lower portion of the shaft 35, and the shaft 35 of the locking pin 34 may bear against the wall of the bore 30 in the compression rod 21, thereby maintaining compression of the filtration assembly 10. To remove the locking pin 34 from the bore 30, the pin 34 may be pulled radially out of the bore 30. The ball 40 may be forced back into the shaft 35 of the pin 34 as the pin 34 is removed from the bore 30.

For many embodiments, the locking device may comprise a sleeve including a loading pin. For example, as shown in Figure 11, the locking device 22 may include a sleeve 42 having an unthreaded coaxial through bore 43 and a stationary loading pin 44 which is fixedly attached to the sleeve 42 and extends radially into the through bore 43. To secure the locking device 22 axially in place on the compression rod 21, the sleeve 42 may be mounted to the end of the compression rod 21, the rod 21 being positioned in the through bore 43 of the sleeve 42 with the loading pin 44 in the track 33 of the rod 31, as shown, for example, in Figure 4. The sleeve 42 may slide axially along the rod 21 with the loading pin 44 riding in the longitudinal track 33 and the longitudinal track 33 providing clearance for the loading pin 44. When the loading pin 44 reaches a circumferential groove 31 near an end piece, e.g., near the outer face of an end plate, the sleeve 42 may be rotated to move the loading pin 44 out of the longitudinal track 33 and into the groove 31. Upon engagement of the loading pin 44 in the groove 31, the sleeve 42 may be rotated until the loading pin 44 abuts the stop 32 in the groove 31 and the locking device 22 is axially fixed in position on the rod 31. An end piece, e.g., the outer face of an end plate, may then bear against the sleeve 42 and the loading pin 44 may bear against the wall of the groove 31 in the compression rod 21, thereby maintaining compression of the filtration assembly 10. To unlock the locking device 22, the sleeve 42 may be rotated in the opposite direction to disengage the loading pin 44 from the groove 31 and move the loading pin 44 into the track 33, allowing the sleeve 42 to axially slide back off of the rod 21 along the longitudinal track 33.

Alternatively, the locking device may comprise a sleeve which includes a radially movable loading pin, e.g., a loading pin that may be spring-biased, that extends radially into the through bore. The locking device may be mounted on a compression rod with or without a longitudinal track. The spring-biased loading pin may retract into the sleeve upon engagement with the outer circumference of the compression rod and the sleeve may slide along the compression rod to one of the circumferential grooves, e.g., one of the spiral grooves 31 as shown in Figure 8. When the locking device reaches the desired spiral groove, the sleeve may be rotated and the spring-biased loading pin may move both circumferentially along the groove and radially inwardly to the deepest portion of the groove to axially lock the sleeve in position on the compression rod. An end piece may then bear against the sleeve and the loading pin may bear against the wall of the groove in the compression rod, thereby maintaining compression of the filtration assembly. To unlock the locking device, the sleeve may be rotated in the opposite direction, moving the pin out of the spiral groove and retracting the pin into the sleeve so that the sleeve may slide back off of the rod.

Another example of a locking device 22 may include a hinged sleeve 45, as shown in Figure 12. For example, an unthreaded hinged sleeve 45 may open at a sleeve opening 46 by pivoting about a hinge 50 to enlarge the inner diameter. The open sleeve 45 may then be placed radially directly over a formation in the compression rod and/or slid axially along the rod to a formation. For example, to lock the locking device 22 onto the compression rod 21, the open sleeve 45 may be placed around a formation in the rod, e.g., around a groove such as the circumferential groove 31 shown in Figure 6 that extends completely around the outer circumference of the rod 21. The hinged sleeve 45 may then be pivoted and latched shut, decreasing the inner diameter of the sleeve 45 and locking the sleeve 45 in position on the rod 21. An inner portion of the sleeve 45 may occupy the groove 31, and an outer portion of the sleeve 45 may extend radially beyond the exterior of the compression rod 21. An end piece, e.g., the outer face of an end plate, may bear against the outer portion of the sleeve 45, and the inner portion of the sleeve 45 may bear against the wall of the groove 31 in the compression rod 21, maintaining compression of the filtration assembly 10. To unlock the hinged sleeve 45, the sleeve may be unlatched and pivoted open about the hinge 50, enlarging the inner diameter of the sleeve. The open sleeve 45 may be radially removed from the groove 31 in the compression rod 21.

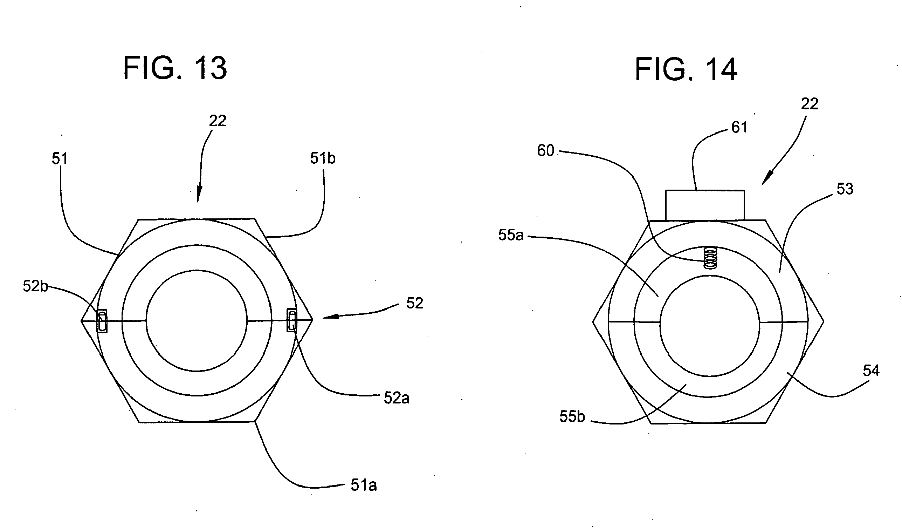

Further exemplary locking devices may include split sleeves. For example, as shown in Figure 13, the locking device 22 may include an unthreaded split sleeve 51 having first and second pieces 51a, 51b and any of a variety of attaching mechanisms.
For some embodiments, the first and second pieces 51 a, 51 b may be substantially identical half sleeves, and the attaching mechanism may be a magnetic attachment 52 which includes first and second magnets 52a, 52b. To lock the locking device 22 onto the compression rod 21, the pieces 51a, 51b of the split sleeve 51 may be separated and placed radially directly over a formation in the compression rod 21, e.g., a groove such as the circumferential groove 31 shown in Figure 6. The sleeve pieces 51a, 51b may then be rejoined, the magnets 52a, 52b holding the sleeve pieces 51a, 51b together and locking the split sleeve 51 in position on the rod 21. An inner portion of the split sleeve 51 may occupy the groove 31, and an outer portion of the sleeve 51 may extend radially beyond the exterior of the compression rod 21. An end piece, e.g., the outer face of an end plate, may bear against the outer portion of the sleeve 51, and the inner portion of the sleeve 51 may bear against the wall of the groove 31 in the compression rod 21, maintaining compression of the filtration assembly 10. To unlock the split sleeve 51, the two sleeve pieces 51 a, 51 b may be pulled apart, breaking the magnetic attachment, and removed from the compression rod 21.

Another example of a locking device 22 having a sleeve 53 is shown in Figure 14. The sleeve 53 may include an outer body 54, first and second half-collar inner pieces 55a, 55b, and a spring biasing mechanism. The spring biasing mechanism may include a spring 60 coupled between the outer body 54 and the at least the first half-collar piece 55a and a button arrangement 61 cooperatively arranged with the body 54 and at least the first half-collar piece 55a to separate the two half-collar pieces 55a, 55b. To open the sleeve 53, the button arrangement 61 may be pressed, which radially separates the two half-collar pieces 55a, 55b, compresses the spring 60, and increases the inner diameter of the sleeve 53. To lock the locking device 22 onto a compression rod 21, the opened sleeve 53 may be mounted onto an end of the compression rod 21 and slid axially to a formation in the rod 21, e.g., around a groove such as the circumferential groove 31 shown in Figure 6. The button arrangement 61 may then be released. The spring 60 may force the first half-collar piece 55a against the second half-collar piece 55b, decreasing the inner diameter of the sleeve 53, lodging the half-collar pieces 55a, 55b in the groove 31, and locking the sleeve 53 in position on the rod 21. An end piece, e.g., the outer face of an end plate, may bear against the body 54 of the sleeve 53, and the two half-collar pieces 55a, 55b may bear against the wall of the groove 31 in the compression rod 21, maintaining compression of the filtration assembly 10. To unlock the sleeve 53, the button arrangement 61 may be pressed, radially separating the two half-collar pieces 55a, 55b and enlarging the inner diameter of the sleeve 53. The sleeve 53 may then be slid axially off of the compression rod 21.

Another exemplary locking device 22 may include an unthreaded U-shaped collar 62 that engages a formation in the compression rod 21. For example, a U-shaped collar 62, as shown in Figure 15 may engage a circumferential groove 31 in the rod 21. The groove 31 may extend circumferentially less than completely around the exterior of the rod 21, as shown in Figure 15, or completely around the exterior of the rod 21, as shown in Figure 6. For some embodiments, the distance between the ends of the legs of the U-shaped collar 62 may be less than the inner diameter of the collar 62 and the U-shaped collar 62 may extend circumferentially around somewhat more than half of the circumference of the rod 21, allowing the ends of the U-shaped collar 62 to grasp the rod 21 and counter radially outwardly directed forces that might unintentionally dislodge the collar 62 from the rod 21. To lock the locking device 22 onto the compression rod 21, the U-shaped collar 62 may be directly positioned radially over the groove 31 in the rod 21 and forced radially into the groove 31 and onto the rod 21. As the collar 62 moves into the groove 31, the legs may first expand and then retract around the rod 21, holding the collar 62 tightly to the rod 21. An inner portion of the collar 62 may occupy the groove 31, and an outer portion of the collar 62 may extend radially beyond the exterior of the compression rod 21. An end piece, e.g., the outer face of an end plate, may bear against the outer portion of the U-shaped collar 62, and the inner portion of the collar 62 may bear against the wall of the groove 31 in the compression rod 21, maintaining compression of the filtration assembly 10. The dimensions of the collar, e.g., the thickness, width and diameter, may be large enough to provide sufficient surface area to counter the force applied to the collar by the compressed filtration assembly. To unlock the U-shaped collar 62, the collar 62 may be forced radially outwardly from the groove 31, the legs of the collar 62 first expanding and then retracting as the collar 62 is dislodged from the groove 31.

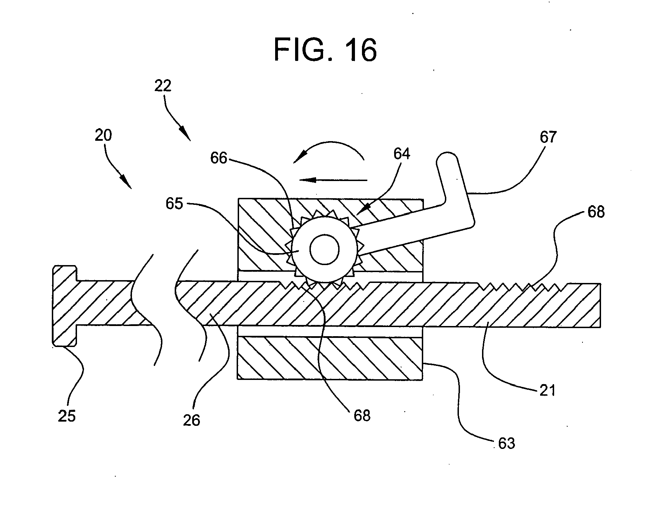

As another example, a locking device 22 may include a sleeve 63 which has a ratchet mechanism 64, as shown in Figure 16 for example. The ratchet mechanism 64 may include a gear 65 having teeth 66 and a handle 67 which rotates the gear 65. The teeth 66 of the gear 65 may engage corresponding formations, such as corresponding teeth 68, on the compression rod 21. The teeth 68 on the rod 21 may extend axially along the rod 21, for example, as a ridge, either continuously or in spaced groups of teeth, as shown in Figure 16. The teeth 66 of the gear 65 and the teeth 68 of the rod 21 may be sufficiently large to facilitate cleaning and sanitation. Rotating the handle 67 may rotate the gear 65 and advance the sleeve 63 against an end piece, e.g., the outer face of an end plate. The end piece may bear against the sleeve 63 and the teeth 66 of the gear 65 may bear against the teeth 68 of the compression rod 21 to maintain compression of the filter assembly 10. The ratchet mechanism 64 may further include a releasable catch mounted between the sleeve 63 and the gear 65 to lock the gear 65 in place with the teeth 66 of the gear 65 enmeshed with the teeth 68 of the compression rod 21, locking the sleeve 63 axially in position along the rod 21. Releasing the catch allows the sleeve 63 to slide away from the end piece axially along the rod 21.

The above locking devices are merely exemplary and do not exclude the possibility of other locking devices attainable through other unthreaded locking engagements. The locking devices may include any locking device that provides a secure, unthreaded engagement with the rod in order to withstand the force applied to the locking device due to the compression of the assembly. For some embodiments, the locking devices may not include projections such as pins and shafts, but may alternatively include cavity structures such as bores and grooves that may engage with a formation on the rod that is in the form of a projection. A few additional exemplary locking devices may also include an unthreaded saddle sleeve, unthreaded push-button sleeves, and unthreaded centerlock sleeves. Any of the locking devices described above may further include any of a variety of additional locking mechanisms.

The locking device may be positioned in the filtration assembly in any of a variety of different ways. For example, as shown in Figure 1, the locking device 22 may be mounted to the compression rod 21 such that it is adjacent to the outer face 14b of the second end plate 12b. Furthermore, the locking device may be selectively mountable along the compression rod to accommodate different numbers of filtration units. Although Figure 1 shows the locking device 22 mounted on the rod 31 at a position that accommodates eight filtration units in addition to a manifold 15 and two end plates 12a, 12b, the locking device may be mounted on the rod to accommodate more or less than these components.

Compression rod arrangements may include any number of locking devices. For example, as shown in Figure 1, a compression rod arrangement 30 may include a cap 36 adjacent the outer face 12a of the first end plate 12a and one locking device 22 positioned adjacent to the outer face 14a of the second end plate 12b. Alternatively, a compression rod arrangement may include two or more locking devices positioned on the rod. For example, in lieu of the cap an additional locking device may be positioned in formations on the rod adjacent to the outer face of the first end plate.

The end pieces may be configured in any of a variety of different ways. For example, as shown in Figure 1, the end pieces may be configured as end plates 12a, 12b or as one or more manifolds 15. For example, some embodiments may have two end plates which serve as end pieces and no manifolds, other embodiments may have two manifolds which serve as end pieces and no end plates, and still other embodiments may have a combination of one or more end plates and one or more manifolds which serve as end pieces. An end piece may have any suitable configuration, such as, for example, a generally hexagonal configuration, as shown in Figure 2. An end piece may also include an inner face that faces the longitudinal center of the filtration assembly and an outer face that faces away from the longitudinal center of the filtration assembly. One or both of the end pieces may further comprise a body and one or more holes or sockets in which a compression rod arrangement may be disposed. Alternatively, the compression rod may pass only partially through one or both of the end pieces.

A filtration unit may have any size and shape and may be configured in a variety of different ways. For example, a filtration unit may include a filtration medium cooperatively arranged with a casing. The casing may include any suitable housing for the filtration medium, e.g., a frame. The filtration unit may be part of a plate and frame device in which separate filtration medium sheets and frames are compressed and sealed between one another. Alternatively, the filtration unit may comprise a filtration cassette in which a filtration medium is integrally fitted with and sealed to a casing.

As shown in Figure 1, each filtration unit 11 may include a filtration medium 70 arranged with a casing 71 to define a feed side 70a and a permeate side 70b of the filtration medium 70. A filtration unit 11 may also include at least one feed passage 72 fluidly communicating with the feed side 70a of the filtration medium 70 and at least one permeate passage 73 fluidly communicating with the permeate side 70b of the medium 70. In tangential flow filtration assemblies, a filtration unit 11 may also include at least one retentate passage 74 fluidly communicating with the feed side 70a of the filtration medium 70 and the feed passage 72. Filtration assemblies arranged for direct flow or dead-end flow filtration may not have any retentate passages. The casing of the filtration unit may include any suitable housing for the filtration medium and may include one or more of the feed, permeate, and retentate passages. For some embodiments, the casing may comprise a frame integral with or separate from the filter medium. The filtration unit may further comprise an exterior, which may include, e.g., the exterior of the casing and against which an end piece or an adjacent filtration unit may bear. The filtration unit may also comprise an inner face 75a facing the longitudinal center of the filtration assembly 10 and an outer face 75b facing away from the longitudinal center of the filtration assembly 10.

The filter medium may be permeable and may have any suitable treatment characteristic. For example, the filtration medium may have, or may be modified to have, any of several characteristics. The filtration medium may have a positive, negative, or neutral electrical charge; it may be liquiphobic or liquiphilic, including, for example, hydrophobic or hydrophilic, or oleophobic or oleophilic; it may include attached functional groups, such as ligands, that can chemically bind to substances in the fluid. The filtration medium may be formed from, impregnated with, or otherwise contain a variety of materials, such as sorbents, ion exchange resins, enzymes, or catalysts, that may chemically or physically bind, react with, or otherwise alter substances in the fluid. Further, the filtration medium may have any of a wide range of molecular cutoffs or removal ratings, including, for example, from ultraporous or nanoporous or finer to microporous or coarser. The filtration medium may thus function as a treatment medium of any type, including a capture medium, a separation medium, or a filter medium.

The manifold may be configured in any of a variety of different ways. For example, as shown in Figure 1, a filtration manifold 13 may comprise a body 80 having first and second opposite sides 16a, 16b. The body of the manifold may comprise any suitable material, including, for example, a metal, such as stainless steel, or a plastic, and may have any suitable configuration, for example, a hexagonal configuration. Different separation processes may require different types and/or sizes of filtration units, and the shape and size of the body of the manifold may be varied accordingly. The body of the manifold may also include any of a variety of coupling elements that may connect and/or align the manifold within a filtration assembly in any of a variety of different ways. Coupling elements may include holes, sockets, bolts, rivets, screws, fittings, or any other structure that may physically and/or fluidly couple the filtration manifold within the filtration assembly.

The body of the manifold may include any or all of permeate collection passages, feed fluid passages, and retentate passages. For example, a tangential flow filtration manifold may include permeate collection passages, feed fluid passages, and retentate passages. Alternatively, a dead-end flow or direct flow filtration manifold may include feed fluid passages and permeate passages but may lack retentate passages. In some embodiments, the body of the manifold may include first and second permeate collection passages that may be configured in any of a variety of different ways. One of many examples of a manifold having various passages is disclosed in United States Provisional Patent Application No. 60/874,012 entitled Filtration Assemblies, Filtration Manifolds, Filtration Units, and Methods of Channeling Permeate, which listed Roger Gagnon, Thomas Scholz, Martin Weinstein, Sylvia Messier, and Steven Pearl as an inventor and which was filed on December 11, 2006. The manifold may be bidirectional, i.e., any or all of the permeate fluid, feed fluid, and retentate fluid may flow into or from the manifold in at least two different, e.g., opposite, directions. In other embodiments, the manifold may be unidirectional, i.e., any or all of the permeate fluid, feed fluid, and retentate fluid may flow into or from the manifold in only one direction. In the filtration assembly 10 shown in Figure 1, the manifold 13 may be bidirectional and may include a feed fluid passage 81 having a feed fluid inlet 82 and opposite feed fluid outlets 83, first and second permeate collection passages 84, 85, each having a permeate inlet 86, a permeate outlet 87, and a permeate sampling port 88, and a retentate passage 90 having opposite retentate inlets 91 and a retentate outlet 92.

The filtration assembly may be arranged in any of a variety of different ways. For example, at least one filtration unit may be positioned between the inner faces of the first and second end pieces. At least one filtration unit may be positioned between an inner face of an end piece and one or both sides of a manifold. In some embodiments, all of the filtration units may be positioned between one end piece and one side of the manifold. The manifold then additionally functions as an end piece. The filtration assembly may include a sequence of any number of filtration units positioned between two end pieces or between a manifold and an end plate. The sequence may include a series of adjacent filtration units. For many embodiments, the filtration assembly may include one or more alignment rod arrangements for aligning the sequence of filtration units and the manifold with the respective feed fluid, permeate, and/or retentate passages fluidly communicating with one another. For example, as shown in Figure 1, alignment rod arrangements 93 may extend between each end plate 12a, 12b and the manifold 15 and may contact the exterior of the filtration units 11 to align the respective fluid passages 72, 73, 74, 81, 84, 85, 90. Alternatively, the alignment rod arrangements may extend between the end plates, e.g., via through holes in the manifold. The alignment rod arrangements may have any of numerous configurations, including, for example, the configurations disclosed in United States Provisional Patent Application No. 60/873,944 entitled Filtration Assemblies and Methods of Installing Filtration Units in Filtration Assemblies, which listed Roger Gagnon, Thomas Scholz, Sylvia Messier, and Martin Weinstein as an inventor and which was filed on December 11, 2006. Some embodiments may not include separate alignment rod arrangements. The compression rod arrangements may then serve to align the filtration units and the manifold as well as establish and/or maintain compression of the filtration assembly.

Methods according to the invention may include compressing the filtration unit(s) between the end pieces with the fluid passages of the filtration units fluidly communicating with the fluid passages of the manifold in any of a variety of different ways. The method may include installing at least one filtration unit between a first end piece and a second end piece. For example, as shown in Figure 1, at least one filtration unit 11 may be installed between the inner faces 13a, 13b of end plates 12a, 12b, or between a side 16a, 16b of the manifold 15 and an inner face 13a, 13b of either of the end plates 12a, 12b.

An unthreaded compression rod may be extended between the end pieces in any of a variety of different ways. As shown in Figure 1, for example, an unthreaded compression rod 21 may pass completely through the first end plate 12a through, e.g., bushing 24, may pass completely through the manifold 15 via, e.g., a through hole in the body 80 of the manifold 15, and may further pass completely through second end plate 12b via, e.g., another bushing 24. The rod 21 may pass through the end pieces so that the cap 25 is positioned adjacent the first end plate 12a, or alternatively, adjacent to a spacer that is adjacent to an end piece. Alternatively, the rod may pass only partially through any of the end pieces or the manifold. For example, the rod may pass through end plate and may fixedly engage in the body of the manifold 11 in any suitable way without passing completely through the manifold, e.g., by fixedly positioning in a socket of the manifold.

The methods may further include compressing the filtration assembly together. Compressing the assembly may include compressing the end pieces, the filtration unit(s), and the manifold together in any suitable way, e.g., using a hydraulic press. For example, as shown in Figure 1, the first and second end plates 66a, 66b, the filtration units 11, and the manifold 15 may be initially compressed by a hydraulic press on both longitudinal ends toward the longitudinal center of the filtration assembly 10. Compression of the end pieces, filtration units, and manifold may seal the fluidly communicating permeate, feed, and retentate passages of each filtration unit with the permeate, feed, and retentate passages of the other filtration units as well as the permeate, feed, and retentate passages of the manifold, respectively. Alternatively, the compression rod arrangements may establish the initial compression.

The compression may be maintained by mounting a locking device to one or more of the unthreaded compression rods in any of a variety of different ways. A locking device may be locked into position on the rod, e.g., in a formation, securely holding the end piece in its compressed position along the rod and maintaining the filter assembly in compression. The locking device may be positioned adjacent to an outer face of an end piece, or alternatively, adjacent a spacer that is adjacent to the outer face of the end piece. The locking device may be mounted to and locked in position on the compression rod in any suitable unthreaded manner, including any of the ways described above. The locking device may also withstand the force applied to it by the compression of the assembly, maintaining its position on and locked engagement with the compression rod. For example, as shown in Figure 1, a locking device 22 may be positioned on the compression rod 21 adjacent to the outer face 14b of the second end piece 12b. The locking device may be locked in its position, e.g., in one of the formations, maintaining the end piece in its compressed position on the rod. Accordingly, the locking device maintains compression of the filtration units, end pieces, and manifold.

To release the compression of the assembly, the locking device may be unlocked from its position on the compression rod and moved along or away from the rod to provide space to permit the manifold, end pieces, and filtration units to decompress and/or separate. The locking device may be unlocked and moved along or away from the rod in any suitable manner, e.g., in any of the manners described above. For example, as shown in Figure 1, the compression of the assembly may be relieved by unlocking the locking device 22 in any of the ways described above, and sliding the locking device along the rod 21 in a direction away from the manifold 15, providing space for the decompression of the manifold 15, filtration units 11, and the end plates 12a, 12b.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filtration assembly comprising:
first and second end pieces;
at least one filtration unit between the first and second end pieces;
at least one compression rod arrangement extending between the end pieces,
wherein the compression rod arrangement comprises an unthreaded compression rod and a locking device mounted to the compression rod to maintain compression of the filtration unit or units between the end pieces.

2. A filtration assembly according to claim 1, wherein the locking device is selectively mountable along the compression rod to accommodate different numbers of filtration units.

3. A filtration assembly according to any one of the preceding claims, wherein the compression rod includes a plurality of formations into which the locking device is engageable.

4. A filtration assembly according to any one of the preceding claims, wherein at least one of the end pieces comprises an end plate.

5. A filtration assembly according to any one of the preceding claims, wherein at least one of the end pieces comprises a manifold.

6. A filtration assembly according to any one of the preceding claims, wherein the compression rod extends through the first and second end pieces.

7. A filtration assembly according to any one of the preceding claims, wherein the locking device is mounted to the compression rod such that it is adjacent to an outer face of one of the end pieces.

8. A filtration assembly according to claim 7, wherein the compression rod further includes a cap that is adjacent to an outer face of the other of the end pieces.

9. A filtration assembly according to claim 1:
wherein the first and second end pieces comprise first and second end plates, each end plate having inner and outer faces;
wherein the filtration assembly further comprises a manifold having first and second opposite sides, the manifold being positioned between the inner faces of the first and second end plates;
wherein said at least one filtration unit is positioned between the first side of the manifold and the inner face of the first end plate and the filtration assembly further comprises at least one filtration unit positioned between the second side of the manifold and the inner face of the second end plate; and
wherein said at least one compression rod arrangement includes a plurality of compression rod arrangements extending between the end plates, each compression rod arrangement including an unthreaded compression rod and a locking device mounted to the compression rod to maintain the compression of the filtration units and manifold between the end plates.

10. A filtration assembly according to claim 9, wherein each unthreaded compression rod includes a longitudinal track and a plurality of circumferential grooves spaced along the track and wherein the locking device includes a sleeve having a loading pin that slides along the track and fits into one of the plurality of grooves.

11. A filtration assembly according to claim 10, wherein the grooves are spaced on the rod at intervals equal to an integral number times the thickness of a filtration unit.

12. A method of maintaining compression of filtration units in a filtration assembly comprising:
installing at least one filtration unit between a first end piece and a second end piece; and
maintaining compression of the end pieces and filtration unit, including mounting a locking device to an unthreaded compression rod.

13. The method according to claim 12, wherein mounting the locking device includes inserting the locking device in a bore in the compression rod.

14. The method according to claim 12, wherein mounting the locking device includes engaging the locking device in a groove in the compression rod.

15. The method according to claim 12 or 14, wherein mounting the locking device includes sliding the locking device along a longitudinal track on the compression rod.

16. The method according to claim 12, wherein mounting the locking device includes engaging a ratchet mechanism with the compression rod.
